# EUROPÄISCHE PATENTANMELDUNG

(11) **EP 0 603 876 A1**
(43) Veröffentlichungstag der Anmeldung: **29.06.1994**
(21) Anmeldenummer: 93120747.6
(22) Anmeldetag: 22.12.1993
(51) Int. Cl.: B32B 27/30, B65D 65/46

(54) **Biologisch abbaubarer Verpackungswerkstoff**

(30) Priorität: 23.12.1992 DE 4244000
(71) Anmelder: Buck Werke GmbH & Co, D-73337 Bad Überkingen (DE)
(72) Erfinder: Schroeter, Johannes, Dr.-Ing., D-83109 Grosskarolinenfeld (DE); Kammerstetter, Heribert, Dipl.-Ing. Dr. techn., D-83395 Freilassing (DE)
(74) Vertreter: Spott, Gottfried, Dr.

(57) **Zusammenfassung**

Beschrieben wird ein biologisch abbaubarer Verpackungswerkstoff, bestehend aus einer sauerstoffsperrenden Kernschicht aus Polyvinylalkohol, die auf beiden Seiten mit einer wasserdampfsperrenden Schicht aus Polyhydroxybutyrat und/oder Polyhydroxyvalerat oder dem Copolymer hiervon versehen ist, wobei auf jeder dieser beiden wasserdampfsperrenden Schichten noch eine Schicht aus einem Cellulosederivat und/oder aus Papier angeordnet ist. Dieser Werkstoff wird insbesondere zur Verpackung von Lebensmitteln, vor allem von flüssigen und festen Lebensmitteln, verwendet.

## Beschreibung

Die Erfindung betrifft einen biologisch abbaubaren Verpackungswerkstoff, ein Verfahren zu seiner Herstellung und die Verwendung dieses Werkstoffes zur Verpackung von insbesondere Lebensmitteln.

Verpackungswerkstoffe dienen dem Zweck, die Wechselwirkung zwischen Umwelt und Füllgut zu minimieren. Hierfür sind - insbesondere im Bereich von Folienverpackungen - sehr effiziente Werkstoffe entwickelt worden, die eine sehr gute Sperrwirkung aufweisen. Insbesondere werden Luftsauerstoff, Wasserdampf und Aromastoffe am Durchdringen der Verpackung gehindert. Die bisher bekannten, auf diesem Gebiet verwendeten Werkstoffe bieten optimale Eigenschaften und sind in der Regel kostengünstig herzustellen. Da sie jedoch aus Kunststoffen bestehen, die unverrottbar sind, ergeben sich hinsichtlich der Entsorgung Probleme. Um die Probleme bei der Entsorgung zu lösen, wurde schon mehrfach vorgeschlagen, biologisch abbaubare Werkstoffe zu verwenden. Ein Nachteil der meisten biologisch abbaubaren Werkstoffe ist es jedoch, daß ihre Sperrwirkung im Vergleich zu den bekannten Verpackungsmaterialien unbefriedigend bis schlecht ist. Die meisten dieser Werkstoffe weisen keine Sperrwirkung gegenüber Gasen, Aromastoffen und/oder Wasserdampf auf oder aber sie werden so schnell bei Umgebungsbedingungen biologisch abgebaut, daß sie für eine Verpackung nicht in Betracht kommen.

Es war nun Aufgabe der Erfindung, einen Verpackungswerkstoff zur Verfügung zu stellen, der eine hohe Sperrwirkung gegenüber Sauerstoff, Aromen und Wasserdampf besitzt, lebensmittelverträglich ist und vollständig biologisch abbaubar ist.

Gelöst wird diese Aufgabe durch einen biologisch abbaubaren Verpackungswerkstoff, bestehend aus einer sauerstoffsperrenden Kernschicht aus Polyvinylalkohol, die auf beiden Seiten mit einer wasserdampfsperrenden Schicht aus Polyhydroxybutyrat, Polyhydroxyvalerat oder einem Copolymer hiervon versehen ist, wobei auf jeder dieser beiden wasserdampfsperrenden Schichten noch eine Schicht aus einem Cellulosederivat und/oder aus Papier angeordnet ist.

Überraschenderweise wurde gefunden, daß ein Werkstoff, der wie in Anspruch 1 definiert aufgebaut ist, hervorragende Eigenschaften besitzt. Unter Umgebungsbedingungen ist er für Aromastoffe, Wasserdampf und Sauerstoff dicht, wird von darin aufbewahrten flüssigen, trockenen oder feuchten festen Lebensmitteln nicht angegriffen, ist während des Gebrauches beständig und wird dennoch in einem vernünftigen Zeitraum biologisch abgebaut.

Der erfindungsgemäße Verpackungswerkstoff enthält als Kernschicht eine Schicht aus Polyvinylalkohol. Polyvinylalkohol ist ein Kunststoff, der biolgisch abbaubar ist und eine hohe Sperrwirkung für Sauerstoff aufweist. Sie beträgt beispielsweise bei Folien mit einer Dicke von 15 µm weniger als 1 cm³/m² pro Tag pro bar. Wird jedoch die Polyvinylalkoholfolie feuchten Bedingungen ausgesetzt, so verschlechtert sich ihre Sauerstoffdurchlässigkeit und geht bei Kontakt mit Wasser vollständig verloren. Daher wird die Polyvinylalkoholkernschicht beidseitig mit einer wasserdampfsperrenden Schicht überzogen, die aus Polyhydroxybutyrat und/oder Polyhydroxyvalerat oder einem Copolymer aus Polyhydroxybutyrat und Polyhydroxyvalerat besteht. Polyhydroxybutyrat und Polyhydroxyvalerat beziehungsweise ein daraus gebildetes Copolymer sind ebenfalls biologisch abbaubare Kunststoffe. Sie sind flüssigkeits- und wasserdampfdicht und verhindern somit, daß Wasserdampf bis zur Kernschicht vordringt, wodurch die Sauerstoffsperreigenschaft der Kernschicht erhalten bleibt. Ein derartiger Verbund könnte zur Verpackung von Lebensmitteln verwendet werden, da Polyhydroxybutyrat und Polyhydroxyvalerat Kunststoffe sind, die Lebensmittel nicht nachteilig verändern. Allerdings ist ein solcher Verbund nur zur kurzzeitigen Verpackung von trockenen Lebensmitteln geeignet. Polyhydroxybutyrat und/oder Polyhydroxyvalerat weisen nämlich eine so hohe biologische Abbaubarkeit auf, daß sie bei Kontakt mit feuchten oder flüssigen Lebensmitteln beziehungsweise mit den üblichen Umgebungsbedingungen innerhalb weniger Wochen abgebaut würden, so daß eine Lagerung von Lebensmitteln in einer derartigen Verpackung nicht sinnvoll erscheint. Um diesen Nachteil auszuräumen, wird der Verbund aus sauerstoffsperrender Kernschicht und wasserdampfsperrenden Schichten beidseitig jeweils mit einer Schicht aus einem Cellulosederivat oder aus Papier versehen. Die Beschichtung auf den beiden äußeren Oberflächen kann gleich oder verschieden sein. Je nach Verwendungszweck wird diese Beschichtung ausgewählt. So kann beispielsweise auf der als innere Oberfläche der jeweiligen Verpackung vorgesehenen Seite ein Cellulosederivat aufgebracht werden, das gegenüber wasserhaltigen Lebensmitteln beständig ist, und auf der als äußere Oberfläche vorgesehen Seite kann Papier aufgebracht werden, das in an sich bekannter Weise bedruckt werden kann.

Als Cellulosederivate, die zur Beschichtung des erfindungsgemäßen Verbundwerkstoffes geeignet sind, dienen beispielsweise Celluloseacetat, Cellulosediacetat, Cellulosepropionat und Celluloseacetobutyrat.

Die Dicke der einzelnen Schichten wird abhängig vom Verwendungszweck und den Umgebungsbedingungen bei der gewünschten Verwendung ausgewählt. Bevorzugt ist eine Schichtdicke von 1 bis 50 µm für die einzelnen Schichten.

Der erfindungsgemäße Verpackungswerkstoff ist durch den Überzug mit einem Cellulosederivat oder Papier vor einem vorzeitigen biologischen Abbau geschützt, so daß die Gebrauchsdauer bis zu mehreren Jahren beträgt. Gleichzeitig wird durch diese Schicht die mechanische Festigkeit erhöht. Nach Gebrauch bietet der erfindungsgemäße Werkstoff keinerlei Schwierigkeit bei der Entsorgung. Er kann entweder kompostiert werden oder zerfällt in hinreichend feuchten Deponien.

Zur Herstellung der erfindungsgemäßen Werkstoffe werden die einzelnen Schichten in Form von Folien miteinander kombiniert. Als weiterer Gegenstand der Erfindung wird ein Verfahren zur Herstellung des erfindungsgemäßen Verpackungswerkstoffes zur Verfügung gestellt, bei dem auf die sauerstoffsperrende Kernschicht aus Polyvinylalkohol die beiden wasserdampfsperrenden Schichten und die weiteren Schichten aus Cellulosederivat beziehungsweise Papier durch Aufgießen, Coextrusion, Beschichten oder Laminieren mit Kleber aufgebracht werden.

Verfahren zur Verbindung von Folien durch Klebung oder thermische Behandlung unter Druck, zum Kaschieren von Werkstoffen auf einem Trägermaterial oder zur Coextrusion sind an sich bekannt und brauchen nicht näher erläutert zu werden. Bevorzugt wird der erfindungsgemäße Werkstoff hergestellt, indem durch Coextrusion eine Verbundfolie mit Polyvinylalkohol als Kernschicht und Polyhydroxybutyrat/Polyhydroxyvalerat Copolymer hergestellt wird. Diese coextrudierte Dreischichtfolie kann dabei direkt auf eine Papierschicht aufextrudiert werden oder wird später auf eine Papierschicht kaschiert. Eine Cellulosederivatschicht wird durch Sprühbeschichtung oder durch Kaschieren einer Folie aufgebracht.

Der erfindungsgemäß zur Verfügung gestellte Verpackungswerkstoff ist sehr vielseitig und zur Verpackung von diversen Gütern geeignet. Aufgrund seiner Lebensmittelverträglichkeit ist es besonders bevorzugt, ihn zur Verpackung von Lebensmitteln zu verwenden. Da der Verpackungswerkstoff sowohl sauerstoffdicht, als auch wasserdampfdicht als auch aromadicht ist, eignet er sich zur Verpackung von flüssigen ebenso wie festen Lebensmitteln und auch zur Verpackung sehr empfindlicher Güter.

Ein weiterer Gegenstand der Erfindung ist daher die Verwendung des erfindungsgemäßen Verpackungswerkstoffs zur Verpackung von flüssigen und festen Lebensmitteln.

## Patentansprüche

1. Biologisch abbaubarer Verpackungswerkstoff, bestehend aus einer sauerstoffsperrenden Kernschicht aus Polyvinylalkohol, die auf beiden Seiten mit einer wasserdampfsperrenden Schicht aus Polyhydroxybutyrat, Polyhydroxyvalerat oder einem Copolymer hiervon versehen ist, wobei auf jeder dieser beiden wasserdampfsperrenden Schichten noch eine Schicht aus einem Cellulosederivat und/oder aus Papier angeordnet ist.

2. Werkstoff nach Anspruch 1, dadurch gekennzeichnet, daß die wasserdampfsperrende Schicht aus Polyhydroxybutyrat-valerat-Copolymer besteht.

3. Werkstoff nach Anspruch 1 oder 2, dadurch gekennzeichnet, daß das Verbundmaterial aus sauerstoffsperrender Kernschicht und wasserdampfsperrenden Schichten auf einer Seite mit einer Schicht aus einem Cellulosederivat und auf der anderen Seite mit einer Schicht aus Papier versehen ist.

4. Werkstoff nach Anspruch 1 oder 2, dadurch gekennzeichnet, daß das Verbundmaterial aus sauerstoffsperrender Kernschicht und wasserdampfsperrenden Schichten beidseitig mit einer Schicht aus einem Cellulosederivat versehen ist.

5. Verfahren zur Herstellung eines biologisch abbaubaren Verpackungswerkstoffes nach einem der Ansprüche 1 bis 4, wobei auf die sauerstoffsperrende Kernschicht aus Polyvinylalkohol die beiden wasserdampfsperrenden Schichten und die weiteren Schichten aus Cellulosederivat beziehungsweise Papier durch Aufgießen, Coextrusion, Beschichten oder Laminieren mit Kleber aufgebracht werden.

6. Verwendung des biologisch abbaubaren Verpackungswerkstoffs nach einem der Ansprüche 1 bis 4, zur Verpackung von flüssigen und festen Lebensmitteln.
